# EUROPEAN PATENT APPLICATION

(11) **EP 2 901 848 A1**
(43) Date of publication of application: **05.08.2015**
(21) Application number: 13840478.5
(22) Date of filing: 09.09.2013
(51) Int. Cl.: A01G 1/00, A01G 9/10, C09K 17/18, C09K 17/32, D06M 15/21, A01K 1/015, C09K 101/00

(54) **MASSIVE FIBER BODY, AND ARTIFICIAL SOIL PRODUCED USING MASSIVE FIBER BODY**

(30) Priority: 27.09.2012 JP 2012213577
(71) Applicant: Toyo Tire & Rubber Co., Ltd., Osaka-shi, Osaka 550-8661 (JP)
(72) Inventor: IOROI, Yoshiyuki, Osaka-shi Osaka 550-8661 (JP); TSUBOI, Masayuki, Osaka-shi Osaka 550-8661 (JP); YAMADA, Rie, Osaka-shi Osaka 550-8661 (JP)
(74) Representative: Hart-Davis, Jason
(86) International application number: PCT/JP2013/074198
(87) International publication number: WO 2014/050519

(57) **Abstract**

A fibrous-mass product is provided which has both water retentivity and strength, and in addition, good air permeability, and can be used as an artificial soil particle. A fibrous-mass product 1 includes a core portion 3 which is an aggregate of fibers 2, and a water permeable membrane 4 which covers the core portion 3. The water permeable membrane 4 has porous structure, and covers at least 40% of an outer surface portion of the core portion 3. The core portion 3 has a water retention material. Ion exchange capability is imparted to at least one of the core portion 3 and the water permeable membrane 4. The fibrous-mass product 1 has a grain size of 1-10 mm. The amount of moisture retained in the fibrous-mass product 1 is adjustable between a wet state in which the core portion 3 is saturated with moisture and an air permeable state in which the core portion 3 is not saturated with moisture.

## Description

### TECHNICAL FIELD

The present invention relates to fibrous-mass products which include an aggregate of fibers, and artificial soils using the fibrous-mass products.

### BACKGROUND ART

A fibrous-mass product which includes an aggregate of fibers has voids between fibers, and therefore, has a light weight and can retain water in the voids. Therefore, fibrous-mass products can be used as a water retention material. Fibrous-mass products may, for example, also be used to carry a catalyst or a useful microorganism in the voids between fibers. Therefore, by utilizing the properties of the voids between fibers, fibrous-mass products are, for example, used as an artificial soil in the agricultural field, and as a carrier for water treatment in the environmental field.

Artificial soil may be used to grow plants in outdoor spaces such as the roof of a building, the balcony of an apartment, etc., or indoor spaces such as a lobby, a living room, etc. In particular, for growing plants in indoor spaces, artificial soil is increasingly frequently used instead of natural soil. This is because the use of natural soil for growing plants in indoor spaces may cause problems, such as difficulty in moving the plant and soil due to its weight, poor indoor sanitation due to proliferation of microorganisms in natural soil, etc. Fibrous-mass products are lighter than the same volume of natural soil, have good drainage performance, and are hygienic, and therefore, may be a material suitable for artificial soil.

Patent Document 1 has proposed a horticultural fiber ball which is a molded spherical mass of palm fibers as a conventional artificial soil using fibers.

Also, Patent Document 2 has proposed a fragment which is obtained by pulverizing solid matter which has been obtained by solidifying natural pulp using resin or glue, as a substitute for natural soil.

### CITATION LIST

### PATENT LITERATURE

Patent Document 1: Japanese Unexamined Utility Model (Registration) Application Publication No. S55-56564
Patent Document 2: Japanese Unexamined Patent Application Publication No. 2004-350655

### SUMMARY OF INVENTION

### TECHNICAL PROBLEM

The horticultural fiber ball of Patent Document 1 retains externally supplied water in the hydrophilic palm fibers, thereby allowing a plant to use the water. However, the horticultural fiber ball is produced by only molding palm fibers into a simple spherical shape, and therefore, does not have sufficient strength. Also, the palm fiber is not covered, and therefore, is likely to quickly lose moisture in a dry external environment.

The plant cultivation device of Patent Document 2 uses the fragment which is obtained by pulverizing solid matter which has been obtained by solidifying natural pulp using resin or glue, as a substitute for natural soil. The fibers of the fragment are solidified using resin or glue while containing water. As a result, the fragment retains a certain amount of moisture. Because the fibers of the fragment are solidified using resin or glue, it is difficult to cause the fragment to internally retain additional moisture supplied externally. The space between the fibers is filled with resin or glue, which causes poor air permeability in the fragment, likely leading to anaerobic conditions. Therefore, it is difficult for the roots of a plant to enter the fragment, so that the plant cannot absorb sufficient moisture from the fragment, and therefore, is likely to be prevented from growing.

With the above problems in mind, the present invention has been made. It is an object of the present invention to provide a fibrous-mass product which has both water retentivity and strength, and in addition, good air permeability, and can be used as an artificial soil particle.

### SOLUTION TO PROBLEM

A fibrous-mass product according to the present invention for achieving the above object includes:
a core portion which is an aggregate of fibers; and
a water permeable membrane which covers the core portion.

The fibrous-mass product thus configured has the core portion which is an aggregate of fibers. Therefore, voids which can retain moisture are formed between the fibers of the core portion. Also, the core portion is covered by the water permeable membrane, and therefore, a certain level of shielding capability and rigidity are provided while water permeability is ensured between the core portion of the fibrous-mass product and the external environment. As a result, the strength of the fibrous-mass product is maintained by the water permeable membrane, resulting in both good water retentivity and strength. Also, the core portion can absorb moisture from the external environment through the water permeable membrane and release moisture to the external environment, whereby the fibrous-mass product thus configured is particularly applicable to applications which involve movement of moisture, such as artificial soil particles, etc.

In the fibrous-mass product of the present invention,
the water permeable membrane preferably has porous structure.

In the fibrous-mass product thus configured, the core portion is covered by the water permeable membrane having porous structure. Therefore, the water permeability between the core portion and the external environment is improved, and moreover, external air is allowed to pass through the porous structure of the water permeable membrane, resulting in good air permeability.

In the fibrous-mass product of the present invention,
the water permeable membrane preferably covers at least 40% of an outer surface portion of the core portion.

In the fibrous-mass product thus configured, at least 40% of the outer surface portion of the core portion is covered by the water permeable membrane. Therefore, rapid movement of moisture between the core portion and the external environment can be prevented while the strength and durability of the fibrous-mass product can be maintained at at least a predetermined level, resulting in an appropriate moisture control.

In the fibrous-mass product of the present invention,
the core portion preferably has a water retention material.

In the fibrous-mass product thus configured, the core portion has a water retention material. Therefore, not only the water retentivity which is inherently possessed by the core portion due to the voids between the fibers, but also the water retentivity of the water retention material, can be imparted to the fibrous-mass product. As a result, the water retentivity of the entire fibrous-mass product is further improved, whereby the fibrous-mass product is resistant to dryness.

In the fibrous-mass product of the present invention,
ion exchange capability is preferably imparted to at least one of the core portion and the water permeable membrane.

In the fibrous-mass product thus configured, ion exchange capability is imparted to at least one of the core portion and the water permeable membrane, resulting in a high ion exchange capacity. The fibrous-mass product thus having ion exchange capability can adsorb a specific ion contained in moisture absorbed by the core portion from the external environment, and therefore, is applicable to various applications.

In the fibrous-mass product of the present invention,
the fibrous-mass product preferably has a grain size of 1-10 mm.

The fibrous-mass product thus configured has a grain size of 1-10 mm, and therefore, a suitable interstice is formed between the fibrous-mass products, resulting in good air permeability and drainage performance.

In the fibrous-mass product of the present invention,
the amount of moisture retained in the fibrous-mass product is preferably adjustable between a wet state in which the core portion is saturated with moisture and an air permeable state in which the core portion is not saturated with moisture.

In the fibrous-mass product thus configured, the amount of moisture retained in the fibrous-mass product is adjustable between a wet state in which the core portion is saturated with moisture and an air permeable state in which the core portion is not saturated with moisture. Therefore, for example, when the amount of moisture in the external environment is large, the core portion is allowed to absorb moisture from the external environment, and when the amount of moisture in the external environment is small, the core portion is allowed to release moisture retained therein to the external environment. Thus, the fibrous-mass product thus configured can suitably move moisture between the core portion and the external environment, and therefore, is suitable for use as an artificial soil particle having a good ability to control moisture.

In the fibrous-mass product of the present invention,
the fiber is preferably a short fiber having a length of 0.2-0.5 mm.

In the fibrous-mass product thus configured, a short fiber having a length of 0.2-0.5 mm is used as the fiber to form the core portion which is an aggregate of the fibers, whereby the voids formed between the fibers can have a uniform size. As a result, the fibrous-mass product can have stable properties (water absorbability, water permeability, air permeability, etc.).

An artificial soil according to the present invention for achieving the above object uses any one of the above fibrous-mass products as an artificial soil particle.

In the artificial soil thus configured, the fibrous-mass product used as an artificial soil particle has both water retentivity and strength, and in addition, good air permeability. Therefore, the artificial soil can be preferably used as a substitute for natural soil.

### BRIEF DESCRIPTION OF DRAWINGS

[FIG. 1] FIG. 1 is a schematic diagram for describing a fibrous-mass product according to the present invention.
[FIG. 2] FIG. 2 is a photograph showing an example of a fibrous-mass product according to an embodiment of the present invention.
[FIG. 3] FIG. 3 is a schematic diagram for describing a situation in which a plant grows in an artificial soil using the fibrous-mass product of the present invention as an artificial soil particle.
[FIG. 4] FIG. 4 is a graph showing example moisture retention curves of artificial soils using the fibrous-mass product of the present invention.
[FIG. 5] FIG. 5 is a microscopic photograph showing a surface of the fibrous-mass product of the present invention.

### DESCRIPTION OF EMBODIMENTS

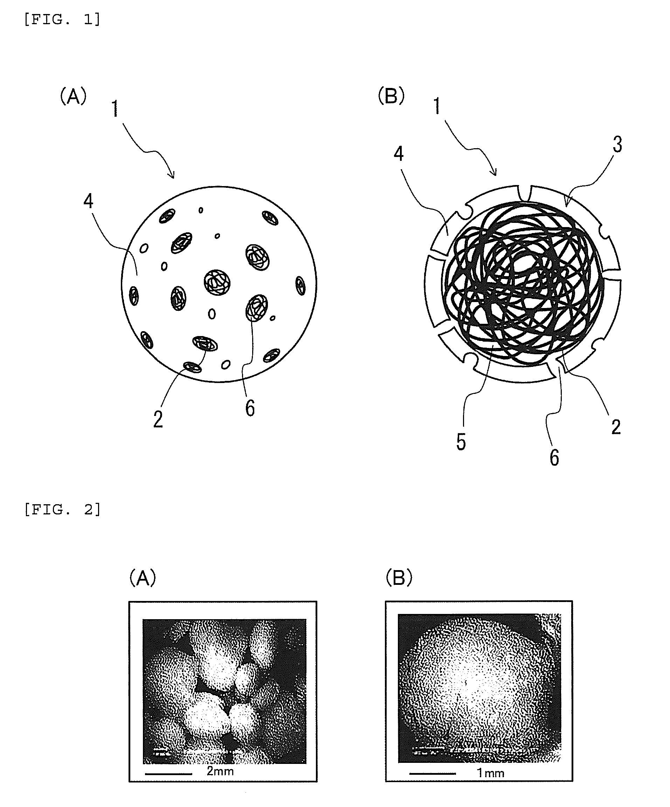

Embodiments related to a fibrous-mass product according to the present invention and an artificial soil using the fibrous-mass product as an artificial soil particle, will be described with reference to FIGS. 1-5. Note that the present invention is not intended to be limited to configurations described below in the embodiments and the drawings.

### <Fibrous-Mass Product>

FIG. 1 is a schematic diagram for describing a fibrous-mass product 1 according to the present invention. FIG. 1(A) is an external view of the fibrous-mass product 1. FIG. 1(B) is a cross-sectional view of the fibrous-mass product 1. FIG. 2 is a photograph showing an example of the fibrous-mass product 1 of the embodiment of the present invention. FIG. 2(A) is a photograph showing a collection of the fibrous-mass products 1. FIG. 2(B) is an enlarged photograph showing the single fibrous-mass product 1. The fibrous-mass product 1 includes a core portion 3 which includes an aggregate of fibers 2, and a water permeable membrane 4 which covers the core portion 3. As shown in FIG. 1, the core portion 3 is a granulated matter which is a complicated aggregate of the fibers 2, and is formed in a spherical shape. The core portion 3 is covered by the water permeable membrane 4. The fibrous-mass product 1 is thus configured. In this embodiment, as shown in FIG. 2, the fibrous-mass product 1 is formed in a three-dimensional shape close to a sphere. Alternatively, the fibrous-mass product 1 may, for example, be formed in the shape of a spheroid (e.g., a rugby ball), a konpeito (Japanese sugar candy which has projections), a polyhedron, or a plate having at least a certain thickness, or in an indefinite shape, etc.

The fiber 2 used to form the core portion 3 is in the form of a long fiber or a short fiber. The short fiber includes a powdered fiber having an extremely short fiber length. By granulating the long fibers or the short fibers, the core portion 3 which is an aggregate of the fibers 2 is formed. A binder, such as resin, glue, etc., may optionally be used during the granulation. Voids 5 are formed between the fibers 2 aggregated in the core portion 3. The fibrous-mass product 1 can retain moisture in the voids 5. Therefore, the conditions of the voids 5 (e.g., the size, number, shape, etc. of the voids 5) have a relation to the amount of moisture which can be retained by the fibrous-mass product 1, i.e., water retentivity. The conditions of the voids 5 can be adjusted by changing the amount (density) of the fibers 2 which are used, the type, thickness, or length of the fibers 2, etc., during the granulation of the core portion 3. Note that, as to dimensions of the fiber 2, the thickness is preferably about 5-100 µm, and the length is preferably about 0.5-10 mm. Also, the fiber 2 may be a precut short fiber. In this case, the length of the short fiber is preferably about 0.2-0.5 mm.

In the fibrous-mass product 1, the fiber 2 is preferably a hydrophilic fiber in order to allow the core portion 3 to retain sufficient moisture. As a result, the water retentivity of the fibrous-mass product 1 can be further improved. The type of the fiber 2 may be either natural fiber or synthetic fiber, and suitably selected, depending on the purpose of use of the fibrous-mass product 1. Examples of the preferable hydrophilic fiber include natural fiber such as cotton, wool, rayon, cellulose, etc., and synthetic fiber such as vinylon, urethane, nylon, acetate, etc. Of these fibers, cotton and vinylon are more preferable. As the fiber 2, a combination of natural fiber and synthetic fiber may be used.

An outer surface portion of the core portion 3 is covered by the water permeable membrane 4. The water permeable membrane 4 has small pores which allows water to pass therethrough. Alternatively, the water permeable membrane 4 may be an osmotic membrane which allows moisture to permeate the membrane from one side and move to the other side. The water permeable membrane 4 has a predetermined level of shielding capability and rigidity while ensuring water permeability between the core portion 3 of the fibrous-mass product 1 and an external environment. Here, the "external environment" means an environment external to the fibrous-mass product 1. Moisture may exist in the external environment. If the water permeable membrane 4 covers at least 40%, preferably at least 60%, of the outer surface portion of the core portion 3, rapid movement of moisture between the core portion 3 and the external environment can be prevented while the strength and durability of the fibrous-mass product 1 can be maintained at at least a predetermined level, resulting in an appropriate moisture control. The water retentivity of the fibrous-mass product 1 may also be adjusted by changing the thickness or properties of the water permeable membrane 4. The water permeable membrane 4 can admit moisture from the external environment and release moisture to the external environment. Therefore, the fibrous-mass product 1 with the water permeable membrane 4 is particularly applicable to applications which involve movement of moisture, such as artificial soil particles, etc.

The water permeable membrane 4 may be formed to have a thickness which slightly extends inward from the outer surface portion of the core portion 3 so that an interlocked portion of the fibers 2 (a portion at which the fibers 2 contact each other) included in the core portion 3 is reinforced. As a result, the strength and durability of the fibrous-mass product 1 can be further improved. The thickness of the water permeable membrane 4 is set to 1-500 µm, preferably 10-200 µm, more preferably 20-100 µm.

Moreover, the water permeable membrane 4 has a porous structure to ensure sufficient air permeability between the core portion 3 and the external environment. For example, as shown in FIG. 1(A), a communication hole(s) 6 through which the core portion 3 and the external environment are allowed to be in communication with each other is formed in the water permeable membrane 4. The communication hole 6 has a size larger than that of the small pore inherently possessed by the water permeable membrane 4, and inevitably allows moisture to pass therethrough, so that the water permeability between the core portion 3 and the external environment is improved. Although, in this embodiment, the water permeable membrane 4 has a porous structure and the communication holes 6 are directly formed in the water permeable membrane 4, the water permeable membrane 4 may be mixed with a porous filler, such as a natural mineral, synthetic polymer foam material, etc., and the communication hole 6 may be formed through the porous filler. The diameter of the communication hole 6 formed in the water permeable membrane 4 is set to 1-2000 µm, preferably 10-900 µm, and more preferably 300-900 µm.

The water permeable membrane 4 is preferably formed of a material which is insoluble in water and highly resistant to oxidation. An example of such a material is a resin material. Examples of such a resin material include polyolefin resins such as polyethylene, polypropylene, etc., vinyl chloride resins such as polyvinyl chloride, polyvinylidene chloride, etc., polyester resins such as polyethylene terephthalate, etc., and styrol resins such as polystyrene, etc. Of them, polyethylene is preferable. Also, instead of the resin material, a polymeric gelling agent such as polyethylene glycol, acrylamide, etc., a naturally-occurring polysaccharide gelling agent such as alginate, carrageenan, etc., a rubber coating agent such as natural rubber, silicone rubber, etc., and the like, may be used.

The fibrous-mass product 1 may be designed so that the water retentivity of the core portion 3 is further improved. For example, the core portion 3 is configured to have a water retention material. In this case, not only the water retentivity which is inherently possessed by the core portion 3 due to the voids 5 between the fibers 2, but also the water retentivity of the water retention material, can be imparted to the fibrous-mass product 1. The water retention material may, for example, be introduced to the core portion 3 by adding the water retention material when the fibers 2 are granulated to form the core portion 3. It is also effective to coat the surface of the fiber 2 with the water retention material. The water retention material introduced to the core portion 3 by these techniques is preferably exposed in the void 5 of the core portion 3. In this case, the water retentivity in the void 5 of the fibrous-mass product 1 is significantly improved, and therefore, the fibrous-mass product 1 is, for example, preferably used as a soil improvement material which is added to an dry environment, such as a desert, etc.

The water retention material may be a polymeric water retention material having water absorption capability. Examples of such a polymeric water retention material include synthetic polymers such as polyacrylate polymer, polysulfonate polymer, polyacrylamide polymer, polyvinyl alcohol polymer, polyalkylene oxide polymer, etc., and natural polymers such as polyaspartate polymer, polyglutamate polymer, polyalginate polymer, cellulose polymer, starch, etc. These water retention materials may be used in combination. Also, a porous material, such as ceramics, etc., may be used as the water retention material.

### <Method for Manufacturing Fibrous-Mass Product>

The fibrous-mass product 1 is manufactured as follows, for example. The fibers 2, such as cotton, vinylon, etc., are aligned using a carding device, etc., before being cut into pieces having a length of about 3-10 mm. The cut fibers 2 are granulated into grains by tumbling granulation, fluidized bed granulation, agitation granulation, compression granulation, extrusion granulation, etc., to form the core portion 3. During the granulation, if the fibers 2 are mixed with a binder, such as resin, glue, etc., the core portion 3 can be efficiently formed. The binder may be either an organic binder or an inorganic binder. Examples of the organic binder include synthetic resin binders such as a polyolefin binder, polyvinyl alcohol binder, polyurethane binder, polyvinyl acetate binder, etc., and naturally-occurring binders such as polysaccharides (e.g., starch, carrageenan, xanthan gum, gellan gum, alginic acid, etc.), animal proteins (e.g., an animal glue, etc.), etc. Examples of the inorganic binder include silicate binders such as water glass etc., phosphate binders such as aluminum phosphate etc., borate binders such as aluminum borate etc., and hydraulic binders such as cement etc. The organic and inorganic binders may be used in combination. Note that if, as the fibers 2, those which easily interlock (e.g., bent fibers) are used, the granulation process alone causes the fibers 2 to easily interlock. In this case, the core portion 3 may be formed without using a binder.

Next, the core portion 3 produced by the granulation is placed in a container. Water is added to the container, where the volume of the water is about half the volume (occupied volume) of the core portion 3, so that the water is caused to permeate the voids 5 of the core portion 3. Moreover, a polyethylene emulsion is added to the core portion 3 impregnated with water, where the volume of the polyethylene emulsion is 1/3-1/2 of the volume of the core portion 3. The polyethylene emulsion may be mixed with an additive, such as a pigment, aroma chemical, fungicide, antimicrobial, air freshener, insecticide, etc. Thereafter, while the core portion 3 is tumbled so that the polyethylene emulsion adheres to the outer surface portion uniformly, the polyethylene emulsion is allowed to permeate the core portion 3 through the outer surface portion. In this case, a central portion of the core portion 3 is already filled with water, and therefore, the polyethylene emulsion remains in the vicinity of the outer surface portion of the core portion 3. Thereafter, the core portion 3 with the adhering polyethylene emulsion is dried in an oven at a temperature of 60-80°C, followed by melting the polyethylene at 100°C, so that the polyethylene is fused with the fibers 2 in the vicinity of the outer surface portion of the core portion 3 to form the water permeable membrane 4. As a result, the outer surface portion of the core portion 3 is covered by the water permeable membrane 4 of polyethylene. Thus, the production of the fibrous-mass product 1 having strength and durability is completed. When the polyethylene is melted, a solvent contained in the polyethylene emulsion evaporates, so that a porous structure is formed in the water permeable membrane 4. The porous structure functions as the communication holes 6 through which the core portion 3 is in communication with the external environment. The fibrous-mass product 1 thus obtained is optionally dried and classified so that the grain size thereof is adjusted.

When a short fiber is used as the fiber 2 to produce the core portion 3 by granulation, the short fiber is agitated using an agitation/mixing granulator while adding the polyethylene emulsion in small amounts. As a result, a part of the short fibers forming the core portion 3 is fixed together, whereby the core portion 3 can become robust. Note that the short fibers may be granulated by adding water thereto before adding the polyethylene emulsion to complete the production of the core portion 3.

### <Artificial Soil Using Fibrous-Mass Product>

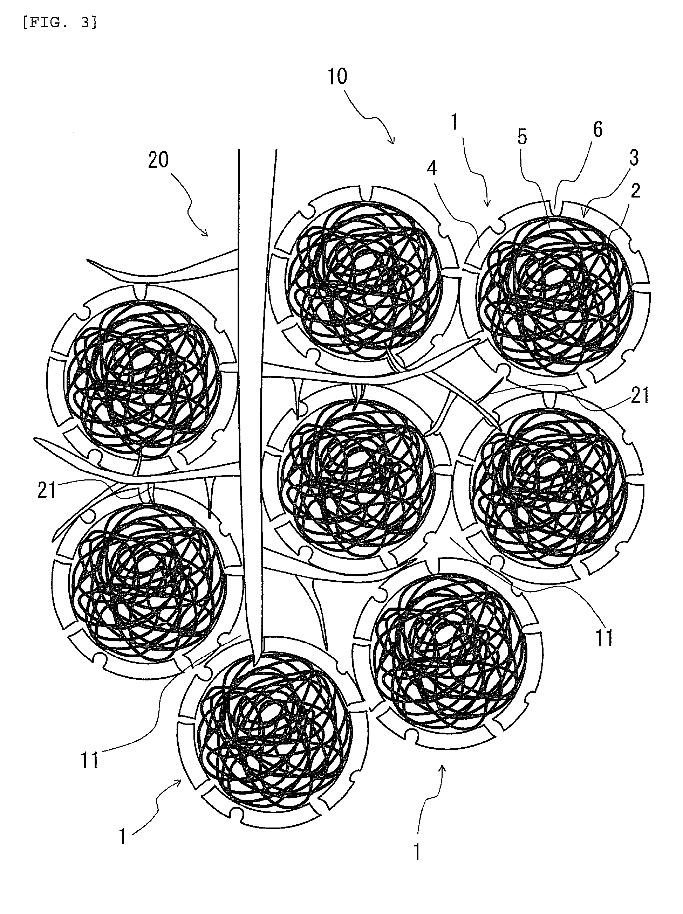

FIG. 3 is a schematic diagram for describing a situation in which a plant grows in an artificial soil 10 using the fibrous-mass product 1 of the present invention as an artificial soil particle. As shown in FIG. 3, a plurality of the fibrous-mass products 1 are collected to form an aggregate structure, in which a certain interstice 11 is formed between each fibrous-mass product 1. The interstice 11 allows air and water to pass therethrough, and therefore, an excess of moisture can be drained off while moisture needed for plants is maintained. When the artificial soil 10 is in a wet state, an excess of moisture is drained through the interstices 11. When the artificial soil 10 is in a dry state, surrounding moisture can be drawn up due to capillary action of the interstices 11. Thus, the artificial soil 10 can hold moisture needed for plants while draining an excess of moisture off, due to the interstices 11 formed between the adjacent fibrous-mass products 1, thereby achieving good air permeability and drainage performance. The interstices 11 also provide spaces for allowing plant roots 20 to grow, and therefore, the plant roots 20 easily extend, which promotes the growth of the plant.

The grain size of the fibrous-mass product 1 used in the artificial soil 10, which is suitably selected, depending on a plant to be cultivated, is preferably 1-10 mm, more preferably 2-8 mm, and even more preferably 2-5 mm. If the grain size of the fibrous-mass product 1 is within the above ranges, a suitable interstice is formed between each fibrous-mass product 1, resulting in good air permeability and drainage performance. If the grain size of the fibrous-mass product 1 is less than 1 mm, the size of the interstice 11 decreases to the extent that an excessive amount of moisture is retained due to the capillary force of the interstices 11. As a result, the drainage performance decreases, which causes it to be difficult for the plant root 20 to absorb oxygen, likely leading to root rot. Also, if the grain size of the fibrous-mass product 1 is less than 1 mm, the produced grain has properties almost similar to those of the fiber, and therefore, is likely to have difficulty in functioning as the fibrous-mass product 1. On the other hand, if the grain size of the fibrous-mass product 1 exceeds 10 mm, it is difficult to produce the fibrous-mass product 1. Even if the particle having a grain size of greater than 10 mm is obtained, the size of the interstice 11 increases, which is likely to cause excessive drainage performance, and therefore, it is difficult for a plant to absorb sufficient moisture, or the artificial soil 10 is likely to be sparse, which may cause a plant to fall down. The grain size of the fibrous-mass product 1 can be adjusted by sieving. The grain size of the fibrous-mass product 1 is determined by the following measurement technique. Initially, a fibrous-mass product to be measured is observed along with a ruler using a camera or a microscope. The image is obtained using an image processing software system (a two-dimensional image analysis software system "WinROOF" produced by MITANI CORPORATION). One hundred fibrous-mass products are selected from the image, and the outlines of the fibrous-mass products are traced. Based on the perimeter of the traced shape, the diameter of a circle corresponding to the perimeter of the traced shape is calculated. An average of the diameters of such circles (number: 100) obtained from the respective fibrous-mass products is referred to as the average size (unit: pixel). Thereafter, the average size is converted into a unit length (µm order to mm order) by comparing it with the ruler in the image, thereby calculating the grain size of the fibrous-mass product. Incidentally, the size of the fiber 2 included in the fibrous-mass product 1, the thickness of the water permeable membrane 4, and the diameter of the communication hole 6 formed in the water permeable membrane 4 are also determined by a measurement technique using this image process.

In the fibrous-mass product 1, the core portion 3 is covered by the water permeable membrane 4, whereby good water retentivity and air permeability are achieved. The amount of moisture retained by the fibrous-mass product 1 can be adjusted between a wet state in which the core portion 3 is saturated with moisture and an air permeable state in which the core portion 3 is not saturated with moisture. The wet state refers to a state in which no more moisture can be retained, e.g., a state in which a pF value described below is close to zero. The air permeable state refers to a state in which moisture can be retained, e.g., a state in which the pF value is greater than 0, i.e., about 2-7. For example, as shown in FIG. 3, the plant root 20 extends in the interstices 11 between the adjacent fibrous-mass products 1, and draws up moisture present in the interstices 11 of the artificial soil 10. The fibrous-mass product 1 can absorb and release moisture, and therefore, if the external environment is in a dry state, moisture can be supplied to the plant root 20 from the core portion 3 of the fibrous-mass product 1 through the water permeable membrane 4. Specifically, at least a portion of water is released from the fibrous-mass product 1 to the external environment, and air enters the void 5 of the fibrous-mass product 1 which has been formed due to the release of water, through the communication hole 6. In this case, as shown in FIG. 3, fine roots 21 which are branches of the plant root 20 are allowed to easily enter the core portion 3 through the communication holes 6 of the fibrous-mass product 1. If water remains in the fibrous-mass product 1, the water is retained in the voids 5 of the core portion 3, and therefore, is not easily released from the fibrous-mass product 1 to the external environment. However, the fine root 21 of a plant entering the fibrous-mass product 1 can reach the void 5 of the core portion 3, and actively draw up the remaining water thus retained. Thus, the artificial soil 10 using the fibrous-mass product 1 allows a plant to effectively use moisture retained in the artificial soil 10, and therefore, the death or growth failure of a plant can be prevented even if water is not supplied to the plant over a long period of time.

The fibrous-mass product 1 of the present invention has good water retentivity for the artificial soil 10, and therefore, is applicable to the growth of leaf vegetables which have been mostly hydroponically cultivated. Here, the water retentivity of the artificial soil 10 can be represented by a pF value as an index. The pF value refers to the common logarithm of the absorption pressure of soil moisture which is represented by the height of a water column, and indicates the strength of pulling moisture in a soil due to the capillary force of the soil. The pF value of 2.0 corresponds to the pressure (pressure hydraulic head) of a water column of 100 cm. The pF value also serves as an index indicating how wet a soil is. If a soil contains sufficient moisture, the pF value is low, and the plant root 20 easily absorbs moisture. On the other hand, if a soil is dry, the pF value is high, and the plant root 20 is required to exert a great force in order to absorb moisture. The pF value of 0 indicates that air is not present in interstices in a soil, and all the interstices are filled with water. The pF value of 7 indicates that a soil is thermally dried at 100°C, and only water chemically united with the soil is present.

In general soils, plants can be cultivated when the pF value is within a range of 1.5-2.7. In order to sufficiently grow plants, the pF value is set to be within a range of 1.7-2.7, preferably a range of 1.7-2.3. When the pF value of a soil is within the range of 1.7-2.7, then if the volume water content of the soil is less than 10 mL/100 mL (i.e., the volume water content is 10%), it is difficult to determine the amount and timing of watering, and therefore, the soil may always be wet or may be quickly dried, likely leading to root rot, or the death of plants due to lack of water. The fibrous-mass product 1 of the present invention can retain a large amount of water in the core portion 3, and therefore, can avoid being dried over a long period of time, and can allow plants to grow well. Also, even if the pF value is at most 1.5, a sufficient amount of interstices is provided between the fibrous-mass products 1, and therefore, air permeability is ensured. Therefore, unlike general soils, it is unlikely that excessive watering causes root rot. Even if a lot of watering is performed without considering the amount and timing of watering, the soil environment remains substantially unchanged. As a result, not only root vegetables but also leaf vegetables can be cultivated, i.e., the artificial soil 10 is applicable to a wider variety of applications.

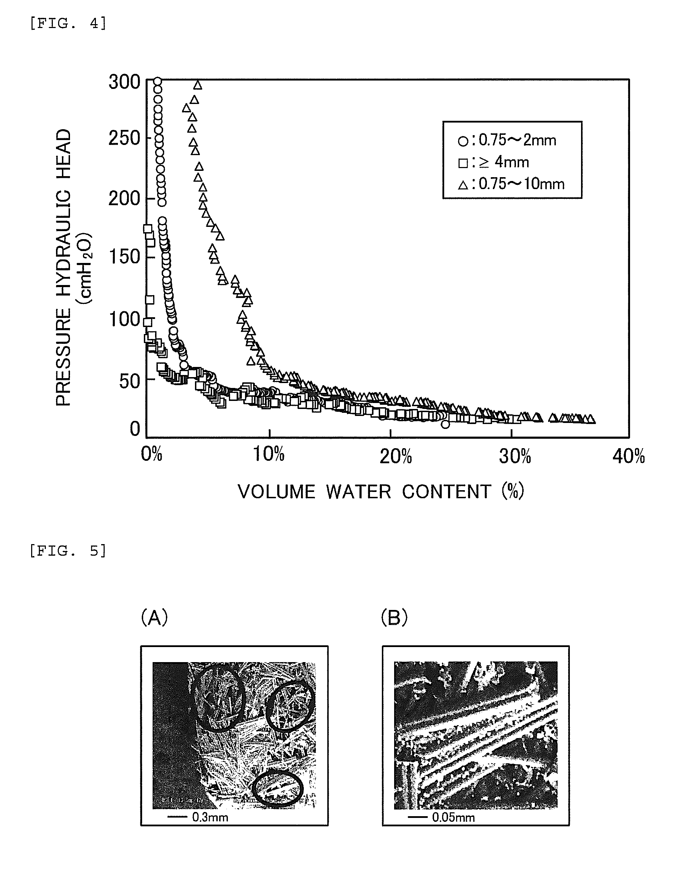

FIG. 4 is a graph showing example moisture retention curves of artificial soils using the fibrous-mass product 1 of the present invention. The moisture retention curves indicate a relationship between a pressure hydraulic head (cmH₂O) and a volume water content (%) when the fibrous-mass product 1 is used as an artificial soil particle. The graph shows the moisture retention curves which were obtained when the following three different fibrous-mass products were used as an artificial soil particle: (a) a fibrous-mass product having a relatively small grain size of 0.75-2 mm (open circles); (b) a fibrous-mass product having a relatively large grain size of at least 4 mm (open squares), and (c) a fibrous-mass product having a wide grain size distribution of 0.75-10 mm (open triangles). For example, as can be seen from the graph of (b), in a region where the pressure hydraulic head is at most 50 cmH₂O, i.e., the pF value is low, the volume water content varies within a broad range of about 5% to more than 30%. If this wide region is applied during irrigation of the artificial soil, the amount of moisture retained in the core portion 3 of the fibrous-mass product 1 can be widely adjusted between the "wet state" and the "air permeable state." Also, the comparison of the graphs (a) to (c) suggests that the volume water content can be adjusted by changing the grain size of the fibrous-mass product 1 even when the pressure hydraulic head is the same. For example, when the pF value is 2.0 which corresponds to a pressure hydraulic head of 100 cmH₂O, then if the grain size of the fibrous-mass product is changed within a range of 0.75-4 mm, the amount of retained water (i.e., the water retentivity) of the core portion 3 of the fibrous-mass product 1 can be adjusted between the "wet state" and the "air permeable state" within a volume water content range of about 0-9%.

When the fibrous-mass product 1 is used as the artificial soil 10 which serves as a substitute for natural soil, the fibrous-mass product 1 is preferably capable of retaining nitrate nitrogen (NO₃⁻), K⁺, Ca²⁺, Mg²⁺, etc., which are nutrients for plants. If the capability of retaining these nutrients is not sufficient, then even when a chemical fertilizer, etc., is supplied to the artificial soil 10, the nutrients flow out due to irrigation, etc., and therefore, plants cannot effectively use the nutrients, likely leading to a failure to grow, for example.

Natural soil has an ability to take cations in, and therefore, has an ability to retain K⁺, Ca²⁺, Mg²⁺, and ammonia nitrogen (NH₄⁺), i.e., fertilizer retentivity. Plants cannot effectively use ammonia nitrogen as a nitrogen source. However, nitrifying bacteria always exist in natural soil. Nitrifying bacteria convert ammonia nitrogen into nitrate nitrogen, which is needed for plants, and supplies the nitrate nitrogen to plants. Therefore, when the fibrous-mass product 1 is used as the artificial soil 10 instead of natural soil, it is necessary to impart ion exchange capability to the fibrous-mass product 1 so that the fibrous-mass product 1 has fertilizer retentivity.

Here, nutrients which are needed for plants include nitrate nitrogen (NO₃⁻), K⁺, Ca²⁺, and Mg²⁺, and therefore, fibrous-mass product 1 needs to have an ability to adsorb both positive and negative ions in order to retain these nutrients. Therefore, when the fibrous-mass product 1 is formed, a cation exchange filler and an anion exchange filler are added so that ions including nitrate nitrogen (NO₃⁻), K⁺, Ca²⁺, and Mg²⁺, that are contained in moisture taken from the external environment, can be adsorbed in the fibrous-mass product 1. Note that NO₃⁻ can pollute rivers and underground water. If an anion exchange filler is added to the fibrous-mass product 1, then even when a large amount of the nitrate-nitrogen nutrient is supplied, the outflow of NO₃⁻ to the water environment can be reduced due to the retention of NO₃⁻ by the fibrous-mass product 1.

In order to impart ion exchange capability to the fibrous-mass product 1, a cation exchange filler and an anion exchange filler are preferably added to at least one of the void 5 of the core portion 3 and the water permeable membrane 4. When ion exchange capability is imparted to the core portion 3, a cation exchange filler and an anion exchange filler may be mixed with the fibers 2 during granulation of the fibers 2. When ion exchange capability is imparted to the water permeable membrane 4, a cation exchange filler and an anion exchange filler may be mixed with a synthetic resin or a gelling agent for the cover, and the outer surface portion of the core portion 3 may be covered with the mixture. Also, a cation exchange filler and an anion exchange filler may be added to both of the core portion 3 and the water permeable membrane 4. Alternatively, a cation exchange filler and an anion exchange filler may be added to the core portion 3 and the water permeable membrane 4 separately.

Examples of cation exchange fillers include smectite minerals such as montmorillonite, bentonite, beidellite, hectorite, saponite, stevensite, etc., mica minerals, vermiculite, zeolite, humus, cation exchange resin, etc. Examples of the cation exchange resin include weakly acidic cation exchange resin and strongly acidic cation exchange resin. Of them, zeolite or bentonite is preferable as a cation exchange filler used in this embodiment. These cation exchange fillers may be used in combination.

The cation exchange capacity of the cation exchange filler is typically set to about 5-50 meq/100 g. If the cation exchange capacity is less than 5 meq/100 g, sufficient nutrients cannot be taken into the fibrous-mass product 1, and nutrients which fail to be taken are likely to flow out due to irrigation, etc. On the other hand, if the cation exchange capacity is greater than 50 meq/100 g, the fertilizer retentivity is not significantly improved, which is not cost-effective.

Examples of anion exchange fillers include naturally-occurring layered double hydroxides having a double hydroxide as a main framework, such as hydrotalcite, manasseite, pyroaurite, sjogrenite, patina, etc., synthetic hydrotalcite and hydrotalcite-like substances, clay minerals such as allophane, imogolite, kaolinite, etc., anion exchange resin, etc. Examples of the anion exchange resin include weakly basic anion exchange resin, strongly basic anion exchange resin, etc. Of them, hydrotalcite is preferable as an anion exchange filler used in this embodiment. These anion exchange fillers may be used in combination.

The anion exchange capacity of the anion exchange filler is typically set to about 5-50 meq/100 g. If the anion exchange capacity is less than 5 meq/100 g, sufficient nutrients cannot be taken into the fibrous-mass product 1, and nutrients which fail to be taken are likely to flow out due to irrigation, etc. On the other hand, if the anion exchange capacity is greater than 50 meq/100 g, the fertilizer retentivity is not significantly improved, which is not cost-effective.

Also, microorganisms which are useful for the growth of plants, such as nitrifying bacteria, VA mycorrhizal fungi, etc., may be immobilized in the water permeable membrane 4 of the fibrous-mass product 1, and the resulting fibrous-mass product 1 may be used in the artificial soil 10. As a result, the growth of plants can be promoted. If a nitrifying bacterium is immobilized in the fibrous-mass product 1, only ammonia nitrogen may be supplied as a nutrient rather than nitrate nitrogen. As a result, it is not necessary to use nitrate nitrogen, which is a high-cost fertilizer, leading to a reduction in cost of plant cultivation.

The artificial soil 10 using the fibrous-mass product 1 as an artificial soil particle can exhibit basic functions (water retentivity, drainage performance, air permeability, and fertilizer retentivity) of soil without using natural soil. Therefore, there is not a risk of contamination by disease-causing insect pests, microorganisms, etc., and therefore, the artificial soil 10 can be safely used indoors, such as in homes, enclosed plant factories, etc. In most enclosed plant factories, hydroponic cultivation is conducted, and therefore, it has so far been difficult to cultivate root vegetables or tall plants. The artificial soil 10, which can support the grown plant root 20, makes it easier to cultivate root vegetables and tall plants.

Also, the fibrous-mass product 1 of this embodiment includes a cation exchange filler and an anion exchange filler, thereby removing cations such as the phosphate ion, ammonium ion, etc. and anions such as the nitrate ion, etc., which are present in a water environment, to improve the water environment. Therefore, the fibrous-mass product 1 may be preferably used for water treatment such as wastewater treatment, etc.

### Examples

The fibrous-mass product of the present invention is particularly preferably used as an artificial soil particle. Therefore, examples of the fibrous-mass product will be described, assuming that the fibrous-mass product is used as an artificial soil particle. Nine example fibrous-mass products were produced (Examples 1-9). Of the nine fibrous-mass products, the fibrous-mass products of Examples 1-3 were evaluated in terms of properties which are needed for artificial soil particles. There are eleven evaluation items described below in the section "Testing and Evaluation Methods." A procedure for producing the fibrous-mass products of Examples 1-3 will be described below. Properties of soils (Comparative Examples 1-3) which are not an artificial soil were evaluated as a control in a manner similar to that of Examples 1-3. Comparative Examples 1 and 2 are commercially available semi-artificial soils, and Comparative Example 3 is a commercially available natural soil.

### (Example 1)

Cotton, which is a natural fiber, was used as fibers included in the fibrous-mass product. Cotton was drawn and aligned using a carding device, and cut into pieces having a length of about 3-10 mm, which were placed and tumbled between two rolling plates to form spherical core portions. Water was added to the spherical core portions, where the volume of the water was about half the volume of the spherical core portions, and was allowed to permeate into the fibers. Next, a polyethylene emulsion (SEPOLSION (registered trademark) G315 manufactured by Sumitomo Seika Chemicals Company Limited, concentration: 40% by weight) was added, where the volume of the polyethylene emulsion was half the volume of the core portions. The core portions were tumbled while allowing the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the outer surface portion of the core portion was covered by a water permeable membrane of porous polyethylene. The finished fibrous-mass product had a grain size which was within a range of 1-10 mm.

### (Example 2)

Vinylon short fibers (manufactured by KURARAY CO., LTD.), which are a synthetic fiber, were used as fibers included in the fibrous-mass product. The vinylon short fiber had a length of 0.5 mm and a fiber diameter of 25 µm, and an apparent volume of 1000 cc. The vinylon short fibers were agitated and tumbled using an agitation/mixing granulator (manufactured by G-Labo, Inc.) for granulation while adding an approximately 10-fold dilution of the polyethylene emulsion used in Example 1 to the vinylon short fibers, thereby forming particulate core portions impregnated with the polyethylene emulsion. Next, the same polyethylene emulsion as that used in Example 1 was added, where the volume of the polyethylene emulsion was half the volume of the core portions. The core portions were tumbled while allowing the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the vinylon short fibers included in the core portion were fixed together, and the outer surface portion of the core portion was covered by a water permeable membrane of porous polyethylene. The finished fibrous-mass product had a grain size which was within a range of 1-10 mm.

Here, FIG. 5 shows a microscopic photograph showing a surface of the fibrous-mass product of this example. FIG. 5(A) is a photograph showing a portion of the surface of the fibrous-mass product. FIG. 5(B) is an enlarged photograph of (A). As shown in FIG. 5 (A), the entire surface of the core portion of the fibrous-mass product is covered by the water permeable membrane of polyethylene, and regions enclosed by ellipses which are slightly darker than the surroundings are communication holes to the core portion. As shown in FIG. 5(B), fine polyethylene particles are aggregated on the surface of the vinylon short fibers forming the core portion to form the water permeable membrane. The interstices between the polyethylene particles are not totally filled in or blocked. As a result, small pores which allow moisture to pass therethrough are formed over the entire surface of the water permeable membrane. When moisture adheres to the surface of the water permeable membrane, the moisture is immediately absorbed into the membrane. This holds true in the case where the water permeable membrane has an increased thickness. This suggests that a large number of small pores are present in the surface of the water permeable membrane.

### (Example 3)

Cellulose short fibers (length: 0.2-0.3 mm, "ARBOCEL (registered trademark)" manufactured by J. RETTENMAIER & SÖHNE GmbH + Co. KG) having an apparent volume of 1000 cc were used as fibers to produce a fibrous-mass product having a core portion whose outer surface portion was covered by a water permeable membrane of porous polyethylene in a manner similar to that of Example 2. The finished fibrous-mass product had a grain size which was within a range of 1-5 mm.

### <Testing and Evaluation Methods>

### (1) Water retentivity

A soil to be tested was loaded in a chromatography column. Water was poured into the column so that the soil was completely immersed in the water. The soil was allowed to stand for one hour, followed by removal of the water from the bottom of the chromatography column. When the water did not drop from the chromatography column during a period of three minutes, the amount of the retained water was measured. The amount of the retained water was converted into that per 100 cc of the soil to be tested, which was referred to as a water retentivity. Note that the amount of the retained water was measured as follows: 140 cc of a soil to be tested was loaded in a chromatography column; water was added from the top; the weight was measured after a predetermined period of time had elapsed; and the weight of the soil to be tested which had been previously measured was subtracted from that weight.

### (2) The amount of retained water in watering

A soil to be tested was loaded in a chromatography column. Watering was conducted at intervals of three to five minutes, so that 110 ml of water (10 ml × 5 times + 20 ml × 3 times) was poured from the top of the chromatography column. When the water did not drop from the chromatography column during a period of three minutes, the amount of the retained water was measured. The amount of the retained water was converted into that per 100 cc of the soil to be tested, which was referred to as the amount of retained water in watering. The amount of retained water was measured in a manner similar to that of (1).

### (3) Water absorption rate

The proportion of the amount of retained water in watering to the water retentivity was referred to as a water absorption rate (%).

### (4) Air permeability

A soil to be tested was loaded in a chromatography column. When the soil to be tested was saturated with water, air was caused to flow upward from the bottom of the chromatography column at a rate of 1 L/min and a pressure of 0.06 MPa. The flow rate at the exit was measured and referred to as an air permeability.

### (5) Lightness

A soil to be tested was dried, followed by determination of the weight per 100 cc of the dried soil, which was referred to as a lightness.

### (6) Particle strength

A load of 2.5 kg was applied to a soil particle to be tested. The soil particle was visually evaluated in terms of whether or not the soil particle was deformed or destroyed. When the external appearance of the soil particle was not changed, this result was referred to as "no".

### (7) Ability to Grow without water

A soil to be tested was placed in a 150 cc container having a hole at the bottom. A radish after 10 days of sprouting was transplanted to the soil saturated with water. Thereafter, irrigation was not conducted, and the number of days (survival period) was counted until the radish died.

### (8) Workability in transplantation

A soil to be tested was evaluated in terms of how much the hand or a floor became dirty when a plant was transplanted or seeds were planted.

### (9) Drainage in watering

It was observed whether or not drained water was colored or whether or not solid matter flowed out together with drained water when a soil to be tested was watered.

### (10) Change over time

A soil to be tested which was used in cultivation of a plant was visually evaluated in terms of changes over time in the shape of the soil particle.

### (11) External appearance (impression)

A soil to be tested which was placed in a transparent container was visually evaluated in terms of impression of external appearance, i.e., color and shape.

The results of the evaluation of the fibrous-mass products (artificial soils) of Examples 1-3 and the commercially available soils of Comparative Examples 1-3 are summarized in Table 1.

**Table 1**

| | Example 1 | Example 2 | Example 3 | Comparative Example 1 | Comparative Example 2 | Comparative Example 3 |
|---|---|---|---|---|---|---|
| Soil type | Artificial soil | Artificial soil | Artificial soil | Semi-artificial soil manufactured by company A | Semi-artificial soil manufactured by company B | Natural soil manufactured by company C |
| Material | External surface of cotton ball coated with polyethylene | Vinylon short fiber coated with polyethylene | Cellulose short fiber coated with polyethylene | Surface of charcoal coated with porous ceramics | Granular baked clay | Organic material |
| Grain size (mm) | 1-10 | 1-10 | 1-5 | 4-5 | 2-12 | ≤ 1 |
| Water retentivity (g/100 cc) | 37.8 (high) | 30.0 (high) | 48.6 (very high) | 22.6 (low) | 26.9 (low) | 36.7 (low) |
| Amount of retained water in watering (g/100 cc) | 37.5 (large) | 30.0 (large) | 55.3 (very large) | 14.2 (small) | 26.8 (small) | 27.7 (small) |
| Water absorption rate | 99% (fast) | 98% (fast) | 88% (fast) | 63% (slow) | 100% (fast) | 75% (normal) |
| Air permeability (L/min) | 1 (good) | 1 (good) | 1 (good) | 1 (good) | 1 (good) | 0.5 (bad) |
| Lightness (g/100 cc) | 16.8 (light) | 28.1 (light) | 0.23 (ultralight) | 72.9 (heavy) | 39.7 (heavy) | 53.3 (heavy) |
| Particle strength | No (strong) | No (strong) | No (strong) | Destroyed (weak) | Destroyed (weak) | Compressed (weak) |
| Ability to grow without water Survival period | 5 days (long) | 5 days (long) | 6 days (long) | 1 day (short) | 6 days (long) | 7 days (long) |
| Workability in transplantation Dirtiness of hand or floor | Less (good) | Less (good) | Less (good) | Less (good) | Scattered dust (bad) | Dirty (bad) |
| Drainage in watering | Small (good) | Small (good) | Small (good) | Colored (bad) | Colored (bad) | Colored (bad) |
| Change over time | Less | Less | Less | Peeling surface | Chips and cracks | Reduced volume |
| External appearance (impression) | Can be colored (good) | Can be colored (good) | Can be colored (good) | Colorful, true sphere (good) | Brick color | Natural color of soil |

As shown in Table 1, the artificial soils of Examples 1-3 had a higher water retentivity and a higher water retentivity in watering than those of the semi-artificial soils of Comparative Examples 1 and 2. In particular, the water retentivity and the water retentivity in watering of the artificial soil of Example 3 had considerably high measured values, i.e., were very good. As to the water absorption rate which is an advantageous feature of artificial soils, the artificial soils of Examples 1-3 were superior to the semi-artificial soil of Comparative Example 1, and the artificial soils of Examples 1 and 2 were substantially equivalent to the semi-artificial soil of Comparative Example 2. As to the air permeability which is an advantageous feature of artificial soils, the artificial soils of Examples 1-3 were equivalent to Comparative Examples 1 and 2. Also, the artificial soils of Examples 1-3 had a higher water absorption rate and air permeability than those of the natural soil of Comparative Example 3, and were equivalent or superior to the natural soil of Comparative Example 3 in terms of water retentivity and water retentivity in watering, which are advantageous features of natural soils. Moreover, the artificial soils of Examples 1-3 were superior to Comparative Example 1, and substantially equivalent to Comparative Examples 2 and 3, in terms of the ability to grow without water. Thus, it was demonstrated that the artificial soils of Examples 1-3 have a good ability to retain water which is needed for plants. According to these results, it was demonstrated that the artificial soils of Examples 1-3 have both water retentivity, which is an advantageous feature of natural soils, and air permeability, which is an advantageous feature of semi-artificial soils, and therefore, can be preferably used as a substitute for natural soil.

The artificial soils of Examples 1-3 have high particle strength, and do not change very much over time, and therefore, may be preferably recycled. Also, the artificial soils of Examples 1-3 are lighter than the soils of Comparative Examples 1-3. In particular, the artificial soil of Example 3 is considerably lightweight, and therefore, may be preferably used on the roof of a building, the balcony of an apartment, etc. Moreover, the artificial soils of Examples 1-3 have good workability in transplantation and do not substantially make drained water dirty during watering, and have white external appearance which looks clean. The artificial soils of Examples 1-3 can be colored using a pigment, and therefore, may be preferably used as a highly ornamental indoor artificial soil.

### <Fibrous-Mass Product Having Fertilizer Retentivity>

If fertilizer retentivity can be imparted to the fibrous-mass product of the present invention, the fibrous-mass product inherently having high water retentivity additionally acquires fertilizer retentivity, and can be used as a well-balanced artificial soil particle for soil. Therefore, in Examples 4-9, an ion exchange filler was added to fibers, followed by granulation, to produce a fibrous-mass product (artificial soil particle). The fertilizer retentivity of each fibrous-mass product was evaluated using cation exchange capacity (CEC). For evaluation in terms of cation exchange capacity (CEC), extraction liquid of artificial soil particles was prepared using the general extraction and filter unit "CEC-10 Ver. 2" manufactured by FUJIHIRA INDUSTRY CO., LTD., and was used as a sample for measurement of the cation exchange capacity. The cation exchange capacity measuring sample was analyzed using the soil plant general analyzer "SFP-3" manufactured by FUJIHIRA INDUSTRY CO., LTD., to measure the cation exchange capacity (CEC) of the artificial soil particle. A procedure for producing the fibrous-mass products of Examples 4-9, and the results of measurement of the cation exchange capacity (CEC), will now be described.

### (Example 4)

Vinylon short fibers (length: 0.5 mm, fiber diameter: 25 µm, manufactured by KURARAY CO., LTD.) having an apparent volume of 1000 cc were used as fibers. The vinylon short fibers were agitated and tumbled using an agitation/mixing granulator (manufactured by G-Labo, Inc.) for granulation while adding an approximately 10-fold dilution of the polyethylene emulsion used in Example 1, and 100 cc of zeolite ("Ryukyu-lite" manufactured by ECOWEL Inc.) as an ion exchange filler, to the vinylon short fibers, thereby forming particulate core portions impregnated with the polyethylene emulsion and carrying zeolite. Next, the same polyethylene emulsion as that used in Example 1 was added, where the volume of the polyethylene emulsion was half the volume of the core portions. The core portions were tumbled while allowing the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the vinylon short fibers included in the core portion were fixed together, and the outer surface portion of the core portion was covered by a water permeable membrane of porous polyethylene. The finished fibrous-mass product had a grain size which was within a range of 1-10 mm. The fibrous-mass product had a cation exchange capacity (CEC) of 4.1 meq/100 g.

### (Example 5)

Vinylon short fibers (length: 0.5 mm, fiber diameter: 25 µm, manufactured by KURARAY CO., LTD.) having an apparent volume of 1000 cc were used as fibers. The vinylon short fibers were agitated and tumbled using an agitation/mixing granulator (manufactured by G-Labo, Inc.) for granulation while adding an approximately 10-fold dilution of the polyethylene emulsion used in Example 1 to the vinylon short fibers, thereby forming particulate core portions impregnated with the polyethylene emulsion. Next, 30 cc of zeolite ("Ryukyu-lite" manufactured by ECOWEL Inc.) as an ion exchange filler, and the same polyethylene emulsion as that used in Example 1, were alternately added, where the volume of the zeolite and the polyethylene emulsion was half the volume of the core portions. The core portions were tumbled while allowing the zeolite and the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the vinylon short fibers included in the core portion were fixed together, and the outer surface portion of the core portion was covered by a water permeable membrane of porous polyethylene. The finished fibrous-mass product had a grain size which was within a range of 1-10 mm. The fibrous-mass product had a cation exchange capacity (CEC) of 2.5 meq/100 g.

Note that the size distribution of voids in the fibrous-mass product was measured using the mercury intrusion technique to find that the fibrous-mass product had a broad size distribution ranging from 0.1 µm to 50 µm.

### (Example 6)

Vinylon short fibers (length: 0.5 mm, fiber diameter: 25 µm, manufactured by KURARAY CO., LTD.) having an apparent volume of 1000 cc were used as fibers. The vinylon short fibers were agitated and tumbled using an agitation/mixing granulator (manufactured by G-Labo, Inc.) for granulation while adding an approximately 10-fold dilution of the polyethylene emulsion used in Example 1, and 100 cc of zeolite ("Ryukyu-lite" manufactured by ECOWEL Inc.) as an ion exchange filler, to the vinylon short fibers, thereby forming particulate core portions impregnated with the polyethylene emulsion and carrying zeolite. Next, 30 cc of zeolite ("Ryukyu-lite" manufactured by ECOWEL Inc.) as an ion exchange filler, and the same polyethylene emulsion as that used in Example 1, were alternately added, where the volume of the zeolite and the polyethylene emulsion was half the volume of the core portions. The core portions were tumbled while allowing the zeolite and the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the vinylon short fibers included in the core portion were fixed together, and the outer surface portion of the core portion was covered by a water permeable membrane of porous polyethylene. The finished fibrous-mass product had a grain size which was within a range of 1-10 mm. The fibrous-mass product had a cation exchange capacity (CEC) of 4.5 meq/100 g.

### (Example 7)

Cellulose short fibers (length: 0.2-0.3 mm, "ARBOCEL (registered trademark)" manufactured by J. RETTENMAIER & SÖHNE GmbH + Co. KG) having an apparent volume of 1000 cc were used as fibers. The cellulose short fibers were agitated and tumbled using an agitation/mixing granulator (manufactured by G-Labo, Inc.) for granulation while adding an approximately 10-fold dilution of the polyethylene emulsion used in Example 1, and 100 cc of zeolite ("Ryukyu-lite" manufactured by ECOWEL Inc.) as an ion exchange filler, to the cellulose short fibers, thereby forming particulate core portions impregnated with the polyethylene emulsion and carrying zeolite. Next, the same polyethylene emulsion as that used in Example 1 was added, where the volume of the polyethylene emulsion was half the volume of the core portions. The core portions were tumbled while allowing the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the cellulose short fibers included in the core portion were fixed together, and the outer surface portion of the core portion was covered by a water permeable membrane of porous polyethylene. The finished fibrous-mass product had a grain size which was within a range of 1-5 mm. The fibrous-mass product had a cation exchange capacity (CEC) of 4.6 meq/100 g.

### (Example 8)

Cellulose short fibers (length: 0.2-0.3 mm, "ARBOCEL (registered trademark)" manufactured by J. RETTENMAIER & SÖHNE GmbH + Co. KG) having an apparent volume of 1000 cc were used as fibers. The cellulose short fibers were agitated and tumbled using an agitation/mixing granulator (manufactured by G-Labo, Inc.) for granulation while adding an approximately 10-fold dilution of the polyethylene emulsion used in Example 1 to the cellulose short fibers, thereby forming particulate core portions impregnated with the polyethylene emulsion. Next, 30 0 cc of zeolite ("Ryukyu-lite" manufactured by ECOWEL Inc.) as an ion exchange filler, and the same polyethylene emulsion as that used in Example 1, were alternately added, where the volume of the zeolite and the polyethylene emulsion was half the volume of the core portions. The core portions were tumbled while allowing the zeolite and the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the cellulose short fibers included in the core portion were fixed together, and the outer surface portion of the core portion was covered by a water permeable membrane of porous polyethylene. The finished fibrous-mass product had a grain size which was within a range of 1-5 mm. The fibrous-mass product had a cation exchange capacity (CEC) of 4.8 meq/100 g.

### (Example 9)

Cellulose short fibers (length: 0.2-0.3 mm, "ARBOCEL (registered trademark)" manufactured by J. RETTENMAIER & SÖHNE GmbH + Co. KG) having an apparent volume of 1000 cc were used as fibers. The cellulose short fibers were agitated and tumbled using an agitation/mixing granulator (manufactured by G-Labo, Inc.) for granulation while adding an approximately 10-fold dilution of the polyethylene emulsion used in Example 1, and 100 cc of zeolite ("Ryukyu-lite" manufactured by ECOWEL Inc.) as an ion exchange filler, to the cellulose short fibers, thereby forming particulate core portions impregnated with the polyethylene emulsion and carrying zeolite. Next, 30 cc of zeolite ("Ryukyu-lite" manufactured by ECOWEL Inc.) as an ion exchange filler, and the same polyethylene emulsion as that used in Example 1, were alternately added, where the volume of the zeolite and the polyethylene emulsion was half the volume of the core portions. The core portions were tumbled while allowing the zeolite and the emulsion to uniformly adhere to the outer surface portion and permeate into the core portions. The core portions impregnated with the emulsion were dried using an oven at 60°C, followed by melting the polyethylene in the emulsion at 100°C, so that the polyethylene was fused with the fibers. As a result, a fibrous-mass product was produced in which the cellulose short fibers included in the core portion were fixed together, and the outer surface portion of the core portion was covered by a water permeable membrane of porous polyethylene. The finished fibrous-mass product had a grain size which was within a range of 1-5 mm. The fibrous-mass product had a cation exchange capacity (CEC) of 5.0 meq/100 g.

As described, it was demonstrated that the artificial soil particles of Examples 4-9 with an added ion exchange filler has at least a certain cation exchange capacity (CEC). Therefore, fertilizer retentivity can also be imparted to an artificial soil particle including the fibrous-mass product as a major component. In this case, it is possible to provide a value-added artificial soil having both good water retentivity and fertilizer retentivity.

### <Other Embodiments>

In the above embodiments, the artificial soil 10 has been described as an example use of the fibrous-mass product 1 of the present invention. Alternatively, the fibrous-mass product 1 may be used in water treatment. The fibrous-mass product 1 includes the core portion 3 which is an aggregate of the fibers 2, and the water permeable membrane 4 which covers the outer surface portion of the core portion 3. Therefore, when the fibrous-mass product 1 of the present invention is used in excreta treatment, water treatment for fish farming, etc., anaerobic microorganisms can grow in the vicinity of the center of the core portion 3 while aerobic microorganisms can efficiently grow in the water permeable membrane 4. As a result, ammonia nitrogen can be converted into nitrate nitrogen by nitrifying bacteria growing in the water permeable membrane 4 while nitrate nitrogen can be converted into nitrogen gas by denitrifying bacteria growing in the vicinity of the center of the core portion 3, and the nitrogen gas can be eventually discharged out of the system. In this case, an anion exchange filler is preferably added to the water permeable membrane 4. Because the cell membrane of microorganisms is negatively charged, microorganisms are adsorbed by the water permeable membrane 4 due to the anion exchange filler and grow efficiently, whereby the ability to treat nitrogen can be improved.

### INDUSTRIAL APPLICABILITY

The fibrous-mass product of the present invention and the artificial soil using the fibrous-mass product are useful for vegetable gardens, plant factories, indoor gardening, water treatment, excreta treatment, etc.

### REFERENCE SIGNS LIST

- 1: FIBROUS-MASS PRODUCT
- 2: FIBER
- 3: CORE PORTION
- 4: WATER PERMEABLE MEMBRANE
- 5: VOID
- 6: COMMUNICATION HOLE (POROUS STRUCTURE)
- 10: ARTIFICIAL SOIL

## Claims

1. A fibrous-mass product **characterized in that** it comprises:
a core portion which is an aggregate of fibers ; and
a water permeable membrane which covers the core portion.

2. The fibrous-mass product of claim 1, **characterized in that**
the water permeable membrane has porous structure.

3. The fibrous-mass product of claim 1 or 2, **characterized in that**
the water permeable membrane covers at least 40% of an outer surface portion of the core portion.

4. The fibrous-mass product of any one of claims 1-3, **characterized in that**
the core portion has a water retention material.

5. The fibrous-mass product of any one of claims 1-4, **characterized in that**
ion exchange capability is imparted to at least one of the core portion and the water permeable membrane.

6. The fibrous-mass product of any one of claims 1-5, **characterized in that**
the fibrous-mass product has a grain size of 1-10 mm.

7. The fibrous-mass product of any one of claims 1-6, **characterized in that**
the amount of moisture retained in the fibrous-mass product is adjustable between a wet state in which the core portion is saturated with moisture and an air permeable state in which the core portion is not saturated with moisture.

8. The fibrous-mass product of any one of claims 1-7, **characterized in that**
the fiber is a short fiber having a length of 0.2-0.5 mm.

9. An artificial soil **characterized in that** it uses:
the fibrous-mass product of any one of claims 1-8 as an artificial soil particle.
